Europäisches Patentamt

European Patent Office

Office européen des brevets

(11) Publication number: **0 190 017**
A1

## (12) EUROPEAN PATENT APPLICATION

(21) Application number: **86300483.4**

(22) Date of filing: **24.01.86**

(51) Int. Cl.⁴: **F 16 D 41/06**
**F 16 D 15/00**

(30) Priority: **24.01.85 GB 8501822**

(43) Date of publication of application:
**06.08.86 Bulletin 86/32**

(84) Designated Contracting States:
**AT BE CH DE FR GB IT LI LU NL SE**

(71) Applicant: **ROMOSTAR CORPORATION N.V.**
**Centro Comercial Antilia No. 18**
**Curaçao Netherlands Antilles(NL)**

(72) Inventor: **Castens, Richard Rudolf**
**23 Downstreet Flat No. 9**
**London W1(GB)**

(74) Representative: **Hughes, Brian Patrick et al,**
**Graham Watt & Co. Riverhead**
**Sevenoaks, Kent TN13 2BN(GB)**

(54) Improvements in clutches.

(57) A positive clutch comprises rollers (26) located in an annular space between hyperboloid or near hyperboloid surfaces or inner and outer clutch members (14 and 18), the clutch being engaged either by relative rotation of the members in one direction or by axial relative movement of the members.

FIG. 2.

IMPROVEMENTS IN CLUTCHES

FIELD OF APPLICATION

The present invention relates to clutches and concerns positive, axial clutches.

OBJECT OF INVENTION

The object of the present invention is to provide an improved clutch of this kind which may be engaged and disengaged and which may be adapted to drive in one direction when engaged and to freewheel or overrun in the opposite direction when disengaged, or which may be engaged and disengaged and adapted to drive in both directions when engaged.

Thus, a positive, axial clutch in accordance with the present invention includes a first member having a surface of revolution about the axis of rotation of the clutch, which surface is, or approximates to, a hyperboloid through every point on which two straight line generators may be drawn so as to lie wholly in the surface, a second member defining with the first member an annular space between confronting surfaces of the members, one of which is said surface of revolution, and a plurality of thrust transmitting rollers, disposed in said annular space so as to make thrust transmitting contact between said confronting surfaces in the engaged condition of the clutch for driven rotation of said first or second member in at least one direction, each roller then contacting said surface of revoltuion of said first member along a generator of said surface or a line which approximates to such a generator, the rollers all being similarly inclined with respect to radial planes.

By a "positive" clutch is meant a clutch which will transmit torque without slip.

By an "axial" clutch is meant a clutch which is engaged and disengaged axially, and which is engaged axially with axial contact pressure.

A clutch in accordance with the present invention is adapted as a uni-directional clutch by forming the confronting surface of the second member as a surface of revolution which approximates to a hyperboloid as aforesaid, about the axis of rotation of the clutch, the rollers making thrust transmitting contact between confronting surfaces of said members which converge solely in one direction with respect to the axis of rotation of the clutch, in the engaged condition of the clutch.

A clutch in accordance with the present invention is adapted to drive in both directions, when engaged, by locating the rollers in grooves formed in the second member, each groove having a maximum or minimum radius in radial planes at a point lying on a line which approximates to a generator of an imaginary hyperboloid as aforesaid, about the axis of rotation of the clutch, the grooves being so shaped in such planes as to provide ramp surfaces for the rollers extending on each side of each of said lines, the rollers again making thrust transmitting contact between confronting surfaces of said members which converge solely in one direction with respect to the axis of rotation of the clutch, in the engaged condition of the clutch.

Specific embodiments of the present invention will now be described by way of example, and not by way of limitation, with reference to the accompanying drawings in which :-

FIG. 1 is a diagram;

FIG. 2 is a diagrammatic cross-sectional representation of a uni-directional clutch in accordance with the present invention;

FIG. 3 is a view looking on the right hand end in Fig. 2;

FIG. 4 is a diagrammatic cross-sectional elevation of a clutch in accordance with the present invention adapted to drive in both directions when engaged and shown at the top and the bottom of the figure respectively in its engaged and disengaged conditions;

FIG. 5 is a cross-sectional representation of the clutch shown in Fig. 4 and illustrating the rollers;

FIG. 6 is a view looking on the right hand end in Fig. 5; and

FIG. 7 is a further diagram.

DESCRIPTION OF EMBODIMENTS

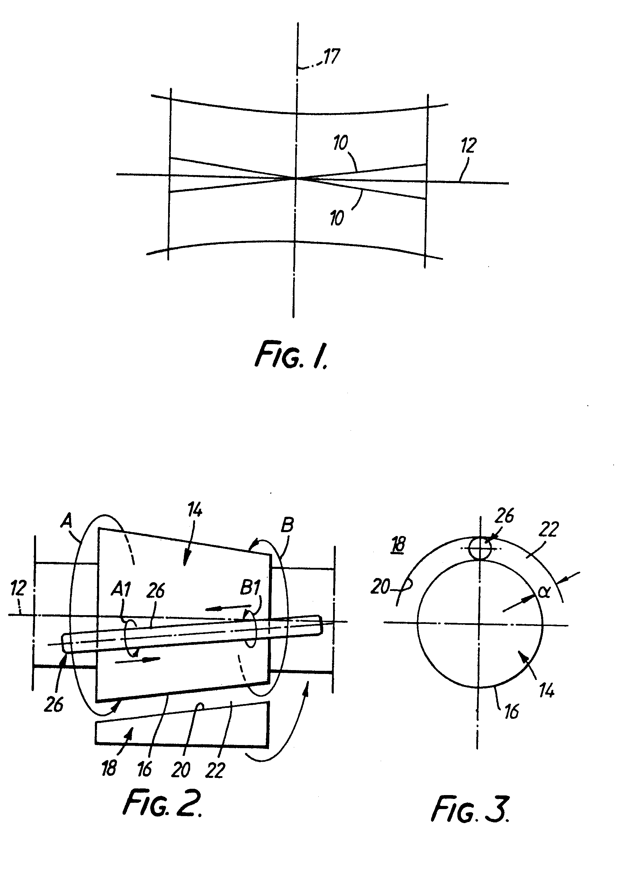

With reference now to the accompanying drawings and first to Fig. 1, this illustrates a hyperboloid of one sheet defined as a ruled surface which is such that through every point of the surface two straight lines such as 10 called generators can be drawn so as to lie entirely in the surface. The hyperboloid illustrated is a surface of revolution about the axis 12, which is the axis of rotation of the positive, axial clutches which are about to be described. These clutches each comprise a first and inner member 14 having an outer surface of revolution 16 about the axis 12 defined as that part of the hyperboloid shown in Fig. 1 immediately to the left hand side of the radial plane defined by the chain-dotted line 17 in that figure, which plane contains the minimum radius of the hyperboloid in radial planes perpendicular to the axis 12. The clutches further comprise a second and outer, annular member 18, the inner surface 20 of which may, as shown in Figs. 1 and 2, be formed as a surface of revolutioin about the axis 12 which approximates to a part of a hyperboloid as already defined with reference to Fig. 1 having a minimum radius in radial planes of $r + d$ where $r$ is the radius of the surface 16 in the plane and $d$ is one radial gap dimension of an annular space 22 formed between the confronting surfaces 16 and 20 of the inner and outer members.

A plurality of thrust transmitting members 26 formed as cylindrical needle rollers of radius R1 are disposed in said space 22 so as to make contact with the surface 16 along a generator 10 of the surface, in the engaged condition of the clutch, the rollers 26, of which there are four or more in number, all being similarly inclined with respect to the radial planes.

The rollers 26 make contact with the surface 20 each along a line which winds helically with respect to the roller axis. These helically curving lines of contact of the rollers 26 with the surface 20 approximate to generators 10 of a hyperboloid and approach such generators as the radius R1 of the rollers is reduced.

Consider now Figs. 2 and 3, rotation of the outer member 18 relative to the inner member 14 in the direction of the arrow A. This causes the rollers to rotate in the same direction about their own axis and therefore to move in the same direction A1 as the arrow A relative to the inner member 14. However the two ends of each roller are at different radii and the ends at the greater radius will tend to move faster causing the rollers to skew slightly, i.e. to increase the inclination of the rollers to  the radial plane thus  cause  the rollers to jam in the gap beween the surfaces and transmit the rotation. Equally, if the outer member rotates in the direction of the arrow B then the rollers will rotate in the direction B1 and tend to skew in the opposite direction to decrease their inclination and move out of jamming engagement. Thus it can be seen that for one direction of relative rotation the clutch transmits rotation while in the other there is simply a freewheeling action, which direction is determined by whether the rollers are located with right hand or left hand skew.

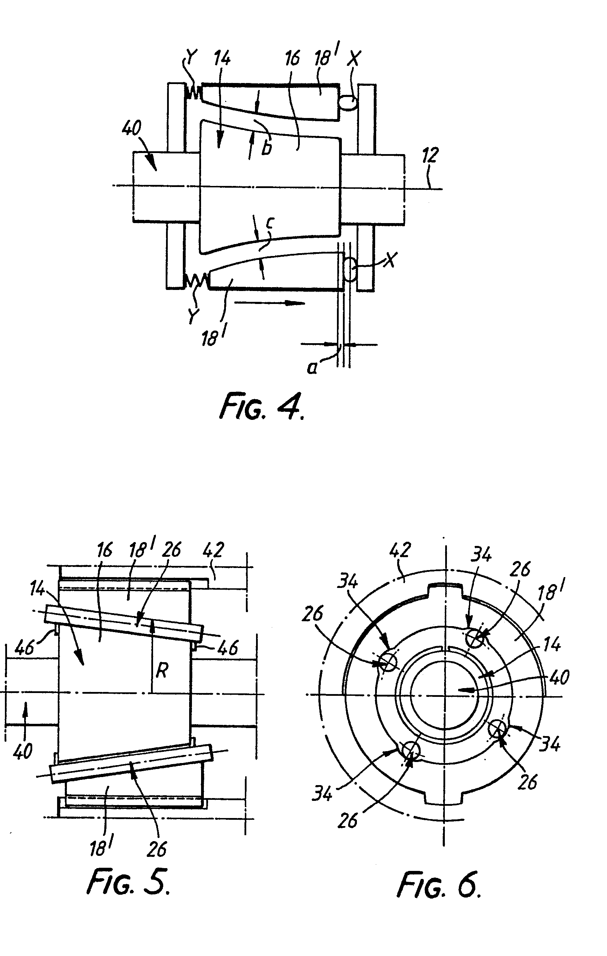

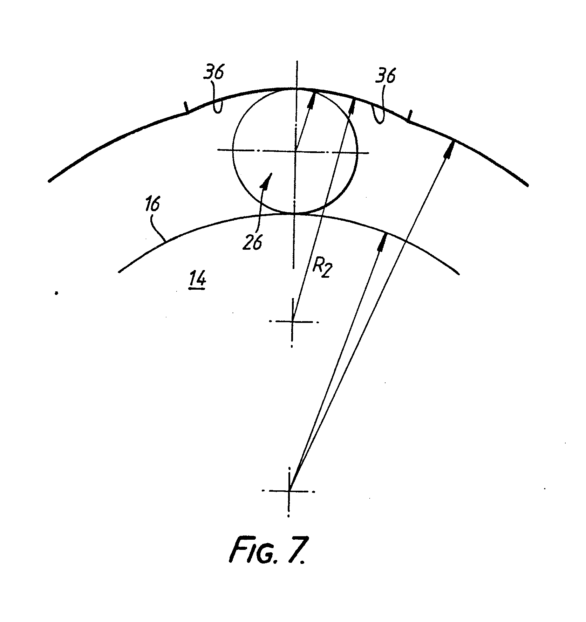

Referring now to Figs. 4 to 7, in this case the rollers 26 are located in grooves 34 formed in the second and outer member 18', each groove having a maximum radius R (see Fig. 5) in radial planes at a point lying in a line which again approximates to a generator 10 of an imaginary hyperboloid of one sheet as already defined above, in the manner described above with reference to the helically curving lines of contact of the rollers with the surface 20, the grooves 34 being curved in such planes at a radius R2 (see Fig. 7) to provide ramp surfaces 36 for the rollers extending on each side of their lines of contact with the outer member 18' in oppositely inclined pairs.

The clutch now being described is engaged by displacing the outer member 18' by the operation of cam means X against the action of a spring or springs Y which act to disengage the clutch under the control of the cam means. In the engaged condition, the rollers 26 make thrust transmitting contact between the outer surface of revolution 16 of the inner member 14 and corresponding ramp surfaces 36 of the ramp pairs, depending upon the direction of rotation, and drive may be transmitted in either direction.

The clutch is self-energising in the sense that upon engagement and subsequent rotation of the rollers 26, the inner and outer members 14, 18' are axially displaced relative to one another to engage the clutch with axial contact pressure, and it will be understood that this increases as the torque increases.

The clearance $c$ = 0.02-0.1 mm > b is all that is necessary for disengagement or overrun of the clutches being described and the axial movement required to engage and disengage the clutches may, therefore, be made very small.

Engagement as such is practically instantaneous, direct, and virtually soundless, and is positive, i.e. without any slip occurring.

Instead of cylindrical rollers 26, elliptically sectioned rollers might be used.

The inner member 14 is shown mounted on a shaft 40 extending on both sides of the member. The outer member 18' is axially splined to drive a further member 42 which may be a toothed gear member for example.

Spring rings 46 may be provided loosely positioning the rollers 26 in the grooves 34.

The grooves 34 may be formed in the inner member 14 instead of the outer member 18' if desired, a suitable retaining means or cage being provided to maintain the rollers 26 in the grooves during overrun of the clutch.

The hyperboloid clutch described with reference to Figs. 4 to 7 may be looked upon as a two-way freewheel with a two-way grip and disengagement device operable by the cam means.

The surface 16 of the inner member 14 may, in a modified construction of either clutch also approximate to that part of the hyperboloid shown in Fig. 1 immediately to the left hand side of the radial plane defined by the chain-dotted line 17. In this case the cylindrical axes of the rollers 26 each lie along a generator 10 of an imaginary hyperboloid of 1 sheet as hereinbefore defined, the rollers all being similarly inclined with respect to the radial planes of the clutch, and the rollers 26 making line contact with the inner member along a helically curving line.

CLAIMS:

1. A positive axial clutch characterised by a first member (14 or 18) having a surface of revolution about the axis of rotation of the clutch, which surface is, or approximates to, a hyperboloid through every point on which two straight line generators may be drawn so as to lie wholly in the surface, a second member (18 or 14) defining with the first member an annular space (22) between confronting surfaces (16, 20) of the members, one of which is said surface of revolution, and a plurality of thrust transmitting rollers (26) disposed in said annular space so as to make thrust transmitting contact between confronting surfaces in the engaged position of the clutch for driven rotation of said first or second member in at least one direction, each roller then contacting said surface of revolution of said first member along a generator of said surface or a line which approximates to such a generator, the rollers all being similarly inclined with respect to radial planes.

2. A clutch as claimed in claim 1, characterised in that the first and second members (14, 18) are axially fixed, relative rotation of the members in one direction causing the thrust transmitting engagement of the rollers (26) between the confronting surfaces by increasing the inclination of the rollers with respect to radial planes, and relative rotation in the other direction breaking the thrust transmitting engagement by reducing the inclination of the rollers.

3. A clutch as claimed in claim 1, characterised in that each roller (26) is located in a groove (34) in one of said confronting surfaces.

4. A clutch as claimed in claim 3, characterised in that the first and second members are relatively movable axially from a first position, in which the rollers (26) contact only the surfaces of their respective grooves (34) and no rotation is transmitted between the members, to a second position in which the rollers engage also the other confronting surface and are cammed by ramp surfaces (36) provided by the grooves into thrust transmitting engagement with the confronting surfaces.

5. A clutch as claimed in claim 4, characterised in that one said member (18') is biased to the first position and means (X) are provided to move the one said member into the second position against the bias.

6. A clutch as claimed in claim 5, characterised in that cam means (X) are provided to move the one said member into the second position.

7.    A clutch as claimed in any of claims 1 or 3 to 6, characterised in that the rollers have an elliptical cross section.

8.    A clutch as claimed in any of claims 3 to 7, characterised in that the inner member is axially movable.

1/3

FIG. 1.

FIG. 2.

FIG. 3.

FIG. 4.

FIG. 5.

FIG. 6.

FIG. 7.

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | DE-A-1 915 516 (KOYO SEIKO)<br>* Whole document * | 1,2 | F 16 D 41/06<br>F 16 D 15/00 |
| Y | | 3,4 | |
| Y | FR-A- 461 663 (POLLET)<br>* Whole document * | 3,4 | |
| X | GB-A- 239 894 (HUMFREY)<br>* Whole document * | 1,4,8 | |
| Y | | 5-7 | |
| Y | DE-B-1 146 710 (NAST)<br>* Whole document * | 5,6 | |
| Y | GB-A- 232 952 (SALOMON)<br>* Whole document * | 7 | F 16 D 41/00<br>F 16 D 15/00<br>F 16 D 7/00 |
| X | US-A-1 901 714 (VINCENT)<br>* Whole document * | 1,4 | |
| A | US-A-1 929 782 (HUGHES) | | |
| A | GB-A- 324 792<br>(HUMFREY-SANDBERG CO., LTD.)<br>---  -/- | | |

TECHNICAL FIELDS SEARCHED (Int. Cl.4)

The present search report has been drawn up for all claims

| Place of search | Date of completion of the search | Examiner |
|---|---|---|
| THE HAGUE | 21-04-1986 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent
Office

## DOCUMENTS CONSIDERED TO BE RELEVANT

Page  2

| Category | Citation of document with indication, where appropriate, of relevant passages | Relevant to claim | CLASSIFICATION OF THE APPLICATION (Int Cl 4) |
|---|---|---|---|
| A | CH-A- 428 338 (FISCHER AG) | | |

-----

**TECHNICAL FIELDS SEARCHED (Int. Cl.4)**

The present search report has been drawn up for all claims

| Place of search | Date of completion of the search | Examiner |
|---|---|---|
| THE HAGUE | 21-04-1986 | BALDWIN D.R. |